# EUROPÄISCHE PATENTSCHRIFT

(11) **EP 1 543 603 B1**
(45) Veröffentlichungstag und Bekanntmachung des Hinweises auf die Patenterteilung: **31.03.2010**
(21) Anmeldenummer: 03797132.2
(22) Anmeldetag: 11.08.2003
(51) Int. Cl.: H02K 9/00, H02K 3/24, H02K 1/20, H02K 3/48

(54) **ELEKTRISCHE MASCHINE MIT EINEM STATOR MIT GEKÜHLTEN WICKLUNGSSTÄBEN**
ELECTRICAL MACHINE WITH A STATOR WITH COOLED WINDING BARS
MACHINE ELECTRIQUE COMPRENANT UN STATOR A DEMI-BOBINES REFROIDIES

(30) Priorität: 23.09.2002 DE 10244202
(43) Veröffentlichungstag der Anmeldung: 22.06.2005
(73) Patentinhaber: Alstom Technology Ltd, 5400 Baden (CH)
(72) Erfinder: GOMES DE LIMA, Paulo, CH-5430 Wettingen (CH)
(86) Internationale Anmeldenummer: PCT/CH2003/000540
(87) Internationale Veröffentlichungsnummer: WO 2004/027960

(56) Entgegenhaltungen:
- DE-C- 445 936
- DE-C- 448 803
- DE-C- 964 161
- GB-A- 1 135 242
- US-B1- 6 177 747

## Beschreibung

### TECHNISCHES GEBIET

Die vorliegende Erfindung bezieht sich auf das Gebiet der Kühlung von elektrischen Maschinen. Sie betrifft eine elektrische Maschine gemäss dem Oberbegriff des Anspruchs 1.

Eine solche Maschine ist z.B. aus der Druckschrift EP-B1-0 172 397 bekannt.

### STAND DER TECHNIK

Grosse rotierende elektrische Maschinen wie z.B. Generatoren zur Erzeugung von elektrischer Energie umfassen einen Rotor und einen Stator, der den Rotor konzentrisch umgibt. Der Stator ist üblicherweise als aus einzelnen Blechen aufgebauter Blechkörper ausgeführt. Bei grossen Leistungen wird die im Stator untergebrachte Statorwicklung mit einzelnen Wicklungsstäben gebildet, die in entsprechende Nuten im Blechkörper des Stators eingelegt und in den Nuten durch Nutenabschlusskeile gesichert werden.

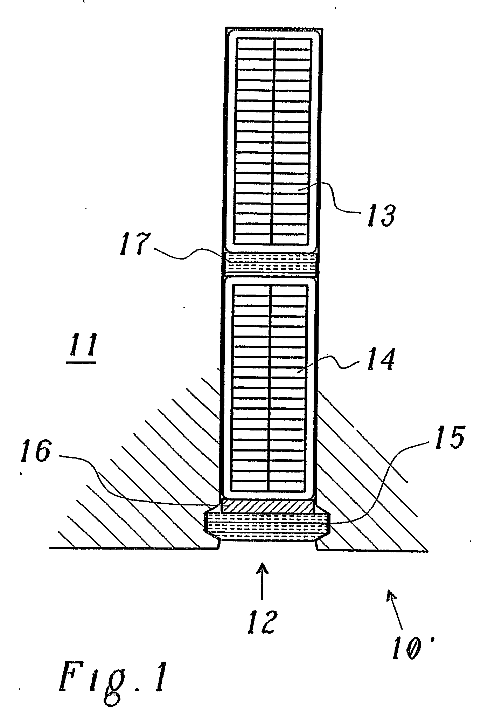

Ein Querschnitt durch eine mit Wicklungsstäben gefüllte Nut eines Stators aus dem Stand der Technik ist in Fig. 1 ausschnittweise dargestellt. Der Stator 10' aus Fig. 1, dessen untere, quer verlaufende Begrenzung gleichzeitig den Luftspalt zum darunter liegenden, in Fig. 1 nicht dargestellten Rotor begrenzt, hat in dem Blechkörper 11 eine sich vom Luftspalt in radialer Richtung nach aussen erstreckende Nut 12, in der in radialer Richtung übereinanderliegend zwei Wicklungsstäbe 14 und 13 angeordnet sind. Die Wicklungsstäbe 13, 14 selbst haben einen in Fig. 1 angedeuteten, komplizierten Innenaufbau, auf den hier nicht weiter eingegangen werden soll.

Zwischen den beiden Wicklungsstäben 13, 14 ist eine Nutzwischenlage 17 vorgesehen, die zur Verbesserung der elektrischen und mechanischen Eigenschaften der Wicklung dient. Die Wicklungsstäbe 13, 14 sind in der Nut 12 in an sich bekannter Weise durch einen Keil 15 gesichert. Zwischen dem Keil 15 und dem oberen Wicklungsstab 14 ist zusätzlich meist eine Keilunterlage 16 vorgesehen.

Während des Betriebes der Maschine wird in den Wicklungen eine erhebliche elektrische Verlustleistung erzeugt, die als Wärme anfällt und aus den Wicklungen heraus nach aussen abgeführt werden muss. Zur Kühlung strömt in der Regel ein Kühlmedium, meist Luft oder ein anderes Gas, durch spezielle radiale Kühlschlitze im Stator-Blechkörper, sowie auch in axialer Richtung durch den Luftspalt oder axiale Kanäle, die zwischen den Nuten im Blechkörper verlaufen. Problematisch ist jedoch stets, die in den Wicklungsstäben erzeugte Wärme aus den Wicklungsnuten heraus durch den Blechkörper hindurch in die nächstliegenden Kühlkanäle zu transportieren.

Eine Möglichkeit der verbesserten Kühlung der Wicklungsstäbe besteht darin, die Wicklungsstäbe teilweise hohl auszuführen und damit selbst als Kühlkanäle auszubilden (siehe z.B. die DE-A1-196 21 058). Hierdurch verringert sich jedoch der Leiterquerschnitt. Darüber hinaus ist es aufwändig, die hohlen Wicklungsstäbe in einen entsprechenden Kühlkreislauf einzubinden.

Eine andere Möglichkeit besteht darin, an den Wicklungsnuten seitlich kanalartige Ausnehmungen vorzusehen, durch welche das Kühlmedium in direktem Kontakt mit den Wicklungsstäben seitlich an diesen entlang strömen kann (siehe dazu die EP-A1-0 684 682). Eine vergleichbare Lösung wird in der eingangs genannten EP-B1-0 172 397 beschrieben, bei der ebenfalls in den Nuten an den Seiten der Wicklungsstäbe Kühlkanäle ausgebildet werden.

Nachteilig ist bei diesen bekannten Lösungen der vergleichsweise hohe Aufwand für die spezielle Ausgestaltung der Wicklungsnuten und die zusätzlich einzubauenden Mittel zum Lenken der Strömung des Kühlmediums, die den Zusammenbau der Maschine erheblich verlängern.

### DARSTELLUNG DER ERFINDUNG

Es ist daher Aufgabe der Erfindung, eine elektrische Maschine mit einer gekühlten Statorwicklung zu schaffen, welche die Nachteile bekannter Maschinen vermeidet, und sich insbesondere durch eine deutlich verbesserte Kühlung der Wicklungsstäbe bei gleichzeitig verringertem Montageaufwand und verbesserten thermomechanischen Eigenschaften auszeichnet.

Die Aufgabe wird durch die Gesamtheit der Merkmale des Anspruchs 1 gelöst.
Der Kern der Erfindung besteht darin, dass die herkömmlichen, aus Vollmaterial bestehenden Abstandsmittel zwischen den Wicklungsstäben durch sich in axialer Richtung erstreckende rohrförmige Abstandselemente ersetzt werden, deren Innenraum jeweils einen Kanal für das Kühlmedium bildet. Hierdurch kann bei praktisch unveränderter Nut und ohne zusätzlichen Platzbedarf auf einfachste Weise ein sehr effizienter Kühlkanal direkt zwischen den Wicklungsstäben eingerichtet werden, der die Verlustwärme aus den Wicklungsstäben effektiv abführt.

Als zusätzlicher Vorteil lässt sich eine Absorption von Vibrationen und Ausdehnungen in den Wicklungsstäben erreichen, wenn die rohrförmigen Abstandselement in radialer Richtung federnd ausgebildet sind. Dies lässt sich insbesondere dadurch erreichen, dass die Abstandselemente einen linsenförmigen Querschnitt aufweisen.

Besonders einfach lassen sich die kühlenden Abstandselemente in den Kühlkreislauf der Maschine integrieren, wenn im Blechkörper des Stators quer zu den Wicklungsstäben in radialer Richtung verlaufend in regelmässigen Abständen vom Kühlmedium durchströmte Kühlschlitze angeordnet sind, und wenn die Abstandselemente im Bereich der Kühlschlitze jeweils Öffnungen aufweisen, durch welche Kühlmedium aus dem Innenraum der Abstandselemente in die Kühlschlitze bzw. von den Kühlschlitzen in den Innenraum der Abstandselemente strömen kann.

Besonders gut ist die Ankopplung, wenn in den Kühlschlitzen Mittel vorhanden sind, welche die Strömung des Kühlmediums aus den Kühlschlitzen in die Öffnungen der Abstandselemente lenken. Bevorzugt werden als Strömungslenkungsmittel Abstandshalter eingesetzt, welche in den Kühlschlitzen angeordnet sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Querschnitt eine mit Wicklungsstäben ausgefüllte Nut in einem Stator-Blechkörper nach dem Stand der Technik;
- Fig. 2: in einer zu Fig. 1 vergleichbaren Darstellung ein bevorzugtes Ausführungsbeispiel der Erfindung; und
- Fig. 3: in einer perspektivischen, teilweise aufgeschnittenen Seitenansicht eine bevorzugte Art der Ankopplung zwischen dem erfindungsgemässen Abstandselement und den (vorhandenen) radialen Kühlschlitzen des Stators.

### WEGE ZUR AUSFÜHRUNG DER ERFINDUNG

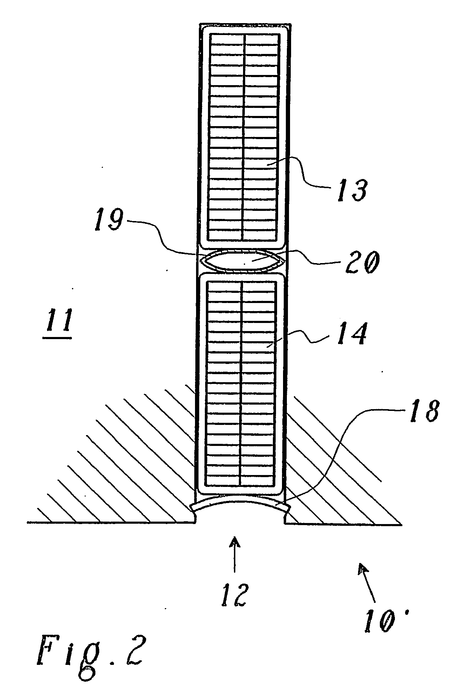

In Fig. 2 ist in einer zu Fig. 1 vergleichbaren Darstellung ein bevorzugtes Ausführungsbeispiel der Erfindung wiedergegeben. Der Stator 10 hat in seinem Blechpaket eine Mehrzahl von in radialer Richtung verlaufenden Nuten 12 zur Aufnahme von (in axialer Richtung verlaufenden) Wicklungsstäben 13, 14. Die in der Nut 12 übereinander angeordneten Wicklungsstäbe 13, 14 sind in der Nut 12 durch einen (federnden) Keil 18 fixiert. Zwischen den Wicklungsstäben 13, 14 ist nun anstelle der herkömmlichen Nutzwischenlage aus Vollmaterial ein hohles Abstandselement 19 mit linsenförmigem Querschnitt angeordnet. Der hohle Innenraum des Abstandselementes 19 bildet einen Kanal 20, durch den Kühlmedium zwischen den Wicklungsstäben 13, 14 hindurch strömen und mit hoher Effizienz Wärme aus den Wicklungsstäben 13, 14 aufnehmen kann. Der linsenförmige Querschnitt des Abstandselementes 19 hat zwei Vorteile: Zum einen ergibt sich bei geeigneter Materialwahl für das Abstandselement 19 ein Federeffekt, der die Wicklungsstäbe in radialer Richtung mit einer Vorspannung beaufschlagt. Hierdurch können Vibrationen in den Wicklungsstäben 13, 14 bzw. Wärmedehnungen oder dgl. aufgenommen und neutralisiert werden, was die Betriebssicherheit deutlich verbessert. Zum anderen liegen die flachen Seiten der "Linse" mit einer grösseren Fläche an den benachbarten Wicklungsstäben an, was den Wärmeübergang zwischen Wicklungsstäben 13, 14 und Abstandselement deutlich erhöht.

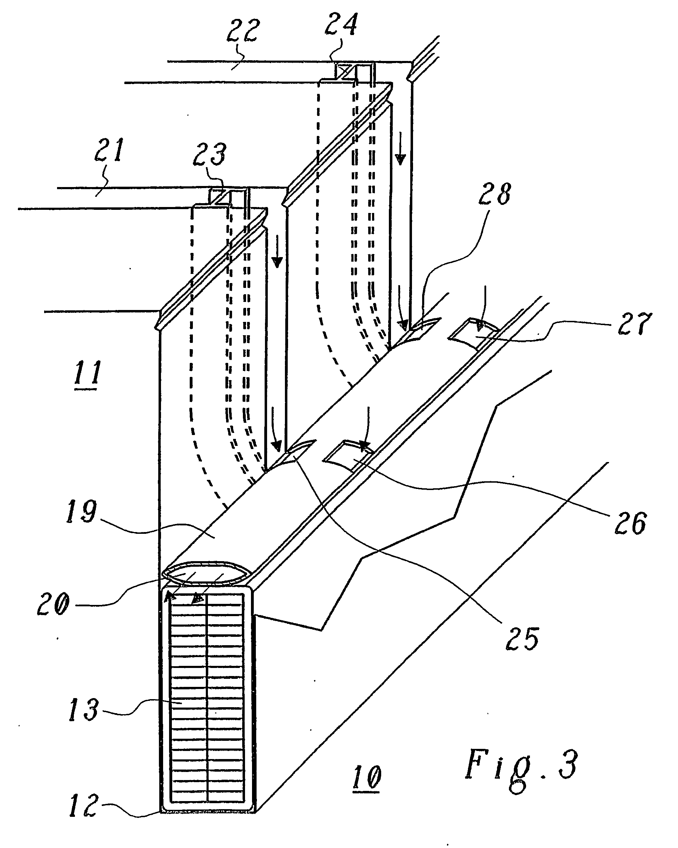

Der Kanal 20 des Abstandselementes 19 wird nun gemäss Fig. 3 auf einfache Weise vorteilhaft in den vorhandenen Kühlkreislauf des Stators 10 dadurch eingebunden, dass an den Stellen, an denen die im Blechkörper 11 des Stators vorhandenen (radialen) Kühlschlitze 21, 22 die Nuten 12 kreuzen, in den Abstandselementen 19 entsprechende Öffnungen 25,..,28 vorgesehen sind, durch welche der Kanal 20 im Abstandselement 19 mit den Kühlschlitzen 21, 22 in der einen oder anderen Richtung Kühlmedium austauschen kann.

In Fig. 3 ist mittels Pfeilen eine Strömungsrichtung eingezeichnet, in der Kühlmedium aus den Kühlschlitzen 21, 23 durch die Öffnungen 25,..,28 in den Kanal 20 einströmt und in axialer Richtung aus dem Kanal 20 wieder herausströmt. Diese Strömung wird dadurch verstärkt, dass die Abstandshalter 23, 24, die in den Kühlschlitzen 21, 22 zur mechanischen Stabilisierung der Kühlschlitze 21, 22 vorgesehen sind, in strömungsleitender Weise zu den Öffnungen 25,..,28 hin gebogen sind. Die umgekehrte Strömungsrichtung ist ebenfalls vorgesehen. Welche Strömungsrichtung gerade vorherrscht, richtet sich nach dem Gesamtströmungsplan der Maschine bzw. des Stators.

Insgesamt ergibt sich mit der Erfindung eine elektrische Maschine mit gekühlter Statorwicklung, die sich durch folgende Vorteile auszeichnet:
- Der Wärmeübertragungskoeffizient von den Wicklungsstäben wird verbessert.
- Die Montagezeit wird durch den Wegfall der Nutzwischenlage verringert.
- Die Menge an gestanztem Material wird verringert.
- Durch einen Federeffekt können Vibrationen und Dehnungen der Windungsstäbe absorbiert werden.

### BEZUGSZEICHENLISTE

- 10,10': Stator
- 11: Blechkörper
- 12: Nut
- 13,14: Wicklungsstab
- 15: Keil
- 16: Keilunterlage
- 17: Nutzwischenlage
- 18: Keil
- 19: Abstandselement (rohrförmig)
- 20: Kanal
- 21,22: Kühlschlitz
- 23,24: Abstandshalter
- 25,..,28: Öffnung

## Patentansprüche

1. Elektrische Maschine, umfassend einen Stator (10) mit einem Blechkörper (11), in welchem eine Mehrzahl von in axialer Richtung verlaufenden Nuten (12) vorgesehen sind, in denen jeweils mehrere Wicklungsstäbe (13, 14) in radialer Richtung übereinander liegend angeordnet und voneinander durch dazwischen liegende Abstandsmittel (19) getrennt sind, und in denen parallel zu den Wicklungsstäben (13, 14) verlaufende Kanäle (20) vorgesehen sind, durch welche ein Kühlmedium zur Kühlung der Wicklungsstäbe (13, 14) strömt, **dadurch gekennzeichnet, dass** als Abstandsmittel sich in axialer Richtung erstreckende rohrförmige Abstandselemente (19) verwendet werden, deren Innenraum jeweils einen Kanal (20) für das Kühlmedium bildet.

2. Elektrische Maschine nach Anspruch 1, **dadurch gekennzeichnet, dass** die Abstandselemente (19) in radialer Richtung federnd ausgebildet sind.

3. Elektrische Maschine nach einem der Ansprüche 1 oder 2, **dadurch gekennzeichnet, dass** die Abstandselemente (19) einen linsenförmigen Querschnitt aufweisen.

4. Elektrische Maschine nach einem der Ansprüche 1 bis 3, **dadurch gekennzeichnet, dass** im Blechkörper (11) des Stators (10) quer zu den Wicklungsstäben (13, 14) in radialer Richtung verlaufend in regelmässigen Abständen vom Kühlmedium durchströmte Kühlschlitze (21, 22) angeordnet sind, und dass die Abstandselemente (19) im Bereich der Kühlschlitze (21, 22) jeweils Öffnungen (25,..,28) aufweisen, durch welche Kühlmedium aus dem Innenraum der Abstandselemente (19) in die Kühlschlitze (21, 22) bzw. von den Kühlschlitzen (21, 22) in den Innenraum der Abstandselemente strömen kann.

5. Elektrische Maschine nach Anspruch 4, **dadurch gekennzeichnet, dass** in den Kühlschlitzen (21, 22) Mittel (23, 24) vorhanden sind, welche die Strömung des Kühlmediums aus den Kühlschlitzen (21, 22) in die Öffnungen (25,..,28) der Abstandselemente lenken.

6. Elektrische Maschine nach Anspruch 5, **dadurch gekennzeichnet, dass** als Strömungslenkungsmittel Abstandshalter (25,..,28) eingesetzt werden, welche in den Kühlschlitzen (21, 22) angeordnet sind.

## Claims

1. Electrical machine, comprising a stator (10) with a laminated core (11) in which two or more slots (12) are provided which run in the axial direction and in each of which two or more winding bars (13, 14) are arranged one above the other in the radial direction and are separated from one another by spacers (19) between them, and in which channels (20) which run parallel to the winding bars (13, 14) are provided, through which a cooling medium flows, in order to cool the winding bars (13, 14), **characterized in that** tubular spacing elements (19), which extend in the axial direction and whose interior in each case forms a channel (20) for the cooling medium are used as spacers.

2. Electrical machine according to Claim 1, **characterized in that** the spacing elements (19) are sprung in the radial direction.

3. Electrical machine according to one of Claims 1 or 2, **characterized in that** the spacing elements (19) have a lenticular cross section.

4. Electrical machine according to one of Claims 1 to 3, **characterized in that** cooling slots (21, 22) through which the cooling medium flows are arranged at regular intervals running in the radial direction in the laminated core (11) of the stator (10) and transversely with respect to the winding bars (13, 14), and **in that** the spacing elements (19) each have openings (25, ..., 28) in the area of the cooling slots (21, 22), through which cooling medium can flow from the interior of the spacing elements (19) into the cooling slots (21, 22) and from the cooling slots (21, 22) into the interior of the spacing elements.

5. Electrical machine according to Claim 4, **characterized in that** means (23, 24) are provided in the cooling slots (21, 22) to guide the flow of the cooling medium from the cooling slots (21, 22) into the openings (25, ..., 28) in the spacing elements.

6. Electrical machine according to Claim 5, **characterized in that** spacekeepers (23, ..., 24) which are arranged in the cooling slots (21, 22) are used as flow guiding means.

## Revendications

1. Machine électrique, comprenant un stator (10) avec un corps en tôle (11), dans lequel sont prévues une pluralité de rainures (12) s'étendant dans la direction axiale, dans lesquelles à chaque fois plusieurs barres d'enroulement (13, 14) sont disposées couchées les unes au-dessus des autres dans la direction radiale et sont séparées les unes des autres par des moyens d'espacement (19) disposés entre elles, et dans lesquelles sont prévus des canaux (20) s'étendant parallèlement aux barres d'enroulement (13, 14), à travers lesquels s'écoule un fluide de refroidissement pour refroidir les barres d'enroulement (13, 14),
**caractérisée en ce que** l'on utilise comme moyens d'espacement des éléments d'espacement (19) de forme tubulaire s'étendant dans la direction axiale, dont l'espace interne forme à chaque fois un canal (20) pour le fluide de refroidissement.

2. Machine électrique selon la revendication 1,
**caractérisée en ce que** les éléments d'espacement (19) sont réalisés de manière élastique dans la direction radiale.

3. Machine électrique selon l'une quelconque des revendications 1 ou 2, **caractérisée en ce que** les éléments d'espacement (19) présentent une section transversale en forme de lentille.

4. Machine électrique selon l'une quelconque des revendications 1 à 3, **caractérisée en ce que** des fentes de refroidissement (21, 22) parcourues par le fluide de refroidissement sont disposées de manière équidistante et s'étendant dans la direction radiale dans le corps en tôle (11) du stator (10) transversalement aux barres d'enroulement (13, 14), et **en ce que** les éléments d'espacement (19) présentent dans la région des fentes de refroidissement (21, 22) à chaque fois des ouvertures (25, .., 28) à travers lesquelles du fluide de refroidissement peut s'écouler hors de l'espace interne des éléments d'espacement (19) dans les fentes de refroidissement (21, 22) ou depuis les fentes de refroidissement (21, 22) dans l'espace interne des éléments d'espacement.

5. Machine électrique selon la revendication 4,
**caractérisée en ce que** des moyens (23, 24) sont prévus dans les fentes de refroidissement (21, 22), lesquels orientent le fluide de refroidissement hors des fentes de refroidissement (21, 22) dans les ouvertures (25, .., 28) des éléments d'espacement.

6. Machine électrique selon la revendication 5,
**caractérisée en ce que** l'on utilise comme moyens d'orientation de l'écoulement des dispositifs d'espacement (23, .., 24) qui sont disposés dans les fentes de refroidissement (21, 22).
